(19) Europäisches Patentamt
European Patent Office
Office européen des brevets

(11) Publication number: 0 208 490 A1

# (12) EUROPEAN PATENT APPLICATION

(21) Application number: 86305054.8

(22) Date of filing: 27.06.86

(51) Int. Cl.[4]: B 01 D 53/34

(30) Priority: 01.07.85 DK 2984/85

(43) Date of publication of application:
14.01.87 Bulletin 87/3

(84) Designated Contracting States:
AT CH DE LI SE

(71) Applicant: A/S NIRO ATOMIZER
No. 305 Gladsaxevej
DK-2860 Soeborg(DK)

(72) Inventor: Moller, Jens Thousig
No. 14 Pilegardsvej
DK-3450 Allerod(DK)

(72) Inventor: Jacobsen, Niels
61 Classensgade
DK-2100 Copenhagen(DK)

(72) Inventor: Nielsen, Kirsten Kragh
No. 50 Ornebakken
DK-2840 Holte(DK)

(72) Inventor: Rasmussen, Stig
No. 23 Kogevejen
DK-4621, Gadstrup(DK)

(74) Representative: Wilkinson, Stephen John et al,
c/o Stevens, Hewlett & Perkins 5 Quality Court Chancery Lane
London WC2A 1HZ(GB)

## (54) A process for removal of mercury vapor and vapor of chlorodibenzodioxins and -furans from a stream of hot flue gas.

(57) Mercury vapor and/or vapor of chlorodibenzodioxins and/or vapor of chlorodibenzofurans are removed from a stream of hot flue gas together with acidic components of the flue gas in a spray absorption process. The absorbent used in said process is an aqueous liquid which besides alkaline components contains suspended activated carbon.

EP 0 208 490 A1

Croydon Printing Company Ltd.

A process for removal of mercury vapor and vapor of chlorodibenzo-dioxins and -furans from a stream of hot flue gas.

FIELD OF THE INVENTION.

It is a well recognized fact that flue gases often contain mercury vapor in such amounts that their release into the atmosphere is regarded as being hazardous. This especially applies to flue gases from incineration plants where domestic refuse is incinerated but also flue gas formed by combustion of certain coals may contain mercury vapor in such amounts that it is highly desirable to remove a substantial part of said mercury vapor before releasing the flue gas into the atmosphere.

In the present specification and the attached claims the term mercury vapor means elementary mercury as well as mercury-containing chemical compounds in the vapor phase.

In recent years a growing concern has arisen as to the presence in flue gases of the toxic polychlorodibenzodioxines (PCDD) and polychlorodibenzofurans (PCDF). Said two series of compounds may be represented by the following formulae

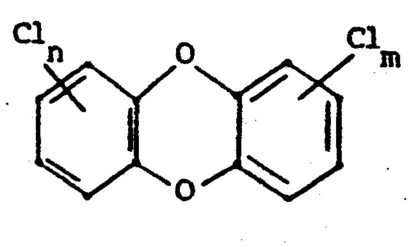

PCDD

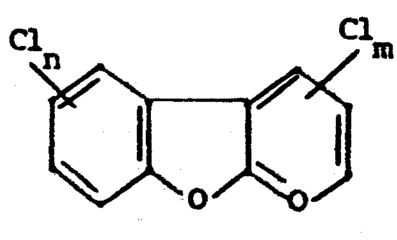

PCDF

wherein n and m each independently is an integer from 0 through 4 provided that n + m is at least 2.

PCDD and PCDF are present in flue gases from incineration plants and in minor proportion also in the

flue gases from power plants. In flue gases these compounds are primarily present in vapor phase and in the present specification the above abbreviations denote the compounds as vapors.

The extremely high toxicity of certain of these compounds makes it desirable to avoid their release into the atmosphere.

DESCRIPTION OF PRIOR ART.

Numerous methods have been suggested for removing or recovering mercury from gases. However, the majority of the prior art processes have been created with the purpose of removing mercury from relative small amounts of gas having high mercury concentration. These processes are not suitable for cleaning flue gas since costs of chemicals would be prohibitive or operation would be impracticable in connection with large volumes of flue gas.

Processes for removing mercury from air of relatively low mercury content have also been suggested. Such a process is disclosed in published European Patent Application No. 1.456. (Akzo N.V.). Said process which is described as particularly suitable for the removal of mercury from air which is vented from buildings, is based on the principle that mercury vapor is absorbed as mercury chloride when passing a bed of activated carbon having a specific chlorine content. According to the specification to said European application high moisture content of the gas from which mercury is to be removed, should be avoided since the effectiveness of the activated carbon is reduced thereby. From said specification it also appears that activated carbon used in a stationary bed without chlorine is unsatisfactory as absorbent for mercury and has a very low capacity for that purpose.

The process of said European application seems unsuitable for treating flue gas since it would require the total amount of flue gas to be passed through a bed of activated carbon to which gaseous chlorine is added, which obviously involves the risk that a surplus of chlorine may be entrained with the flue gas to the atmosphere.

A process for removing mercury vapor from a hot hydrogene chloride-containing flue gas is disclosed in published European patent application no. 13.567, (Svenska Fläktfabriken). According to said process the gas which contains hydrogen chloride and minor amounts of mercury vapor, is contacted with powdered calcium hydroxide, preferably in a fluidized bed. The hydrogen chloride in the gas reacts with the calcium hydroxide to form calcium chloride which apparently is essential to the removal of mercury. Said process is restricted to gases having a substantial contents of hydrogen chloride. This condition will often be fulfilled by the flue gas from a waste incineration plant while flue gasses from other sources may be deficient in that respect.

US patent specification 4.273.747 (Rasmussen) discloses removal of mercury from hot waste gasses by atomizing an aqueous liquid into the waste gasses in the presence of fly ash suspended in the gas and subsequently separating the fly ash together with a substantial part of the mercury originally present as vapor. It is essential that by said treatment the gas stream is cooled from a temperature of at least 200°C to a temperature below 160°C. The aqueous liquid may be just water or it may be an aqueous solution or suspension of an alkaline compound, preferably calcium hydroxide.

Obviously said method will not be suitable in case it is not acceptable to cool the gas to the

extent required or if the amount of fly ash is insufficient due to the use of a preceding fly ash separation. Even when the conditions as to fly ash contents of the flue gas and cooling are satisfied it would in certain applications be desired to increase the efficiency of the removal of mercury vapor in said process.

Efforts to reduce the PCDD and PCDF levels in flue gas have hitherto mainly concentrated on thermal destruction. A reliable thermal destruction is, however, difficult to establish, since a very high temperature is required to ensure a complete destruction.

According to a paper of A.J. Teller and J. D. Lauber : "Control of Dioxin Emissions from Incineration" presented at the 76th annual meeting of the Air Pollution Control Association, Atlanta, Georgia, June 19 - 24, 1983, dioxin theoretic estimations indicate that emission may be reduced by condensing the dioxin thereof. However, A. Nottrodt et al: "Emissionen von polychlorierten Dibenzodioxinen und polychlorierten Dibenzofuranen aus Abfallverbrennungsanlagen", Müll und Abfall 11/84, p. 313-327 (Erich Schmidt Verlag GmbH Berlin, Bielefeld, München) state results showing high vapor phase concentrations after several wet scrubbings with flue gas temperatures lower than those obtained in the theoretic estimations made in said paper by Teller and Lauber.

Consequently a need excists for efficient measures for removing not only mercury vapor but also PCDD and PDCF vapors from flue gases.

SUMMARY OF THE INVENTION.

The present invention is directed to a novel process for efficient removal of mercury vapor and PCDD

and PCDF from a stream of hot flue gas, which process provides a simultaneous removal of acidic components of the flue gas.

It has turned out that incorporation of a relatively small amount of activated carbon in an alkaline feed suspension to be spraydried in a spray absorption process enables a surprising improvement of the ability of the process to remove mercury, PCDD and PCDF.

Consequently the process according to the invention is characterized in that an aqueous liquid which besides alkaline components comprises suspended activated carbon is spray dried in the flue gas which subsequently is freed from the resulting particulate material.

The amount of activated carbon to be used depends on the amount of mercury vapor as well as PCDD and PCDF in the flue gas, on the limits for emission which it is intended to meet, on the extent to which cooling of the gas is permissible, on the proportion of fly ash and the character thereof, etc.

Usually the amount of activated carbon will correspond to at least 5 mg per $Nm^3$ flue gas to be treated. For economic reasons the amount will usually not exceed 500 mg per $Nm^3$ flue gas, peferrably not 200 mg per $Nm^3$.

Since the prior art describes activated carbon as not being very suitable for absorption of mercury vapor when no chlorine is present and since high moisture conditions are described as harmful to mercury sorption by means of activated carbon together with chlorine it could not be predicted that a very efficient mercury removal is obtained by the very simple measures prescribed by the present process. It is also surprising that the rather small additions of activatet carbon to

the aqueous liquid to be atomized, which come into consideration by the present process, enables a reduction of PCDD and PCDF levels to extremely low values.

The preferred alkaline component for the simultaneous removal of acidic components of the gas is calcium hydroxide which by chemical reaction absorbs e.g. sulphur oxides and hydrogen chloride. However, it is to be observed that by the process of the invention presence of hydrogen chloride and consequently production of calcium chloride is not necessary to achieve an efficient removal of mercury vapor.

The fact that in the present process the activated carbon is initially present in aqueous suspension in the atomized droplets and subsequently is embedded in the particulate material comprising the reaction products of e.g. calcium hydroxide and the acidic components of the gas, apparently does not have any substantial adverse influence on the absorption ability of the activated carbon, as would have been expected.

The process of the present invention may be performed using those measures which are conventional in spray absorption processes for desulfurization of flue gases, e.g. as described in US patent 4,279,873 (Felsvang et al), incorporated herein by reference.

In the typical embodiment the process of the invention is performed on a stream of flue gas the fly ash of which has previously been removed in a particle collector, e.g. an electrostatic precipitator. However, the absorption of mercury vapor by activated carbon may be used as a supplement to the absorption by means of fly ash as described in the above cited US specification 4,273,747, in which case at least a portion of the fly ash present in the flue gas stream remains in said stream during the spray absorption process and is recovered together with the particulate material formed by the spray absorption process.

It is also possible to add fly ash to the liquid to be atomized, thereby utilizing the sorption ability of the fly ash to reduce the requirement for activated carbon.

Also other absorbents such as silicates may be added to the liquid to be atomized to minimize the requirement as to activated carbon.

As indicated above the amount of activated carbon necessary to achieve a substantial reduction of the concentration of mercury vapor and PCDD and PCDF in the flue gas is surprisingly small. The actual amounts to be used in each individual case may easily be fixed by a person skilled in the art on the basis of a few tests.

It is an important feature of the invention that by very simple measures a very flexible process is obtained since even flue gases with substantially varying levels of Hg, PCDD and PCDF may be coped with just by changing the amount of activate carbon added to the liquid to be atomized.

The particulate material formed in the spray absorption process and typically comprising calcium sulfite, calcium sulfate, calcium hydroxide and activated carbon and possibly fly ash is preferably separated from the flue gas in a baghouse which enables a prolonged contact between the particulate material and the flue gas.

In the following the process according to the invention will be further illustrated by means of examples.

In these examples analysis was performed on flue gas withdrawn by means of a heated probe with glass lining and equipped with a glass wool filter. The mercury was collected in two impinger flasks in series

containing an aqueous 5% potassium permanganate - nitric acid solution. Mercury was analyzed by flameless atomic absorption using $NaBH_4$ as a reductant (MHS-20, Mercury/ Hydride System by Perkin Elmer, ref. 338 - A2-M 294/ 12.79).

It is to be observed that methods previously used for determination of Hg in flue gases have not always been accurate and have often indicated values lower than the actual ones. Consequently the reults obtained as to removal of Hg vapor in the following examples may not be comparable with prior art results determined by means of less accurate methods of analysis.

EXAMPLE 1

Eight test runs were performed using a partial stream of the flue gas from an incineration plant wherein domestic waste was incinerated.

The spray absorption process was performed in a spray absorber the chamber of which comprised a cylindrical portion having a diameter of 1.2 m and a hight of 0.8 m, and a conical bottom portion the cone angle of which was 60°. The spray absorber was provided with a rotary atomizer. Downstream of the spray absorber particle separation was performed using a baghouse.

An aqueous suspension of slaked lime or an aqueous solution of sodium carbonate (solids content of the suspension or solution app. 5%) was used as feed for the atomizer.

The temperature of the flue gas when led to the spray absorber was 225-300°C and the amount of fly ash therein was 0.5-1.0 g/$Nm^3$ in run nos. 1-5 whereas run nos. 6-8 were performed using flue gas with substantially no fly ash. The flue gas was supplied in an amount of 300 kg/h.

The concentration of mercury vapor was measured upstream of the spray absorber, between the spray absorber and the baghouse filter and downstream of the baghouse filter.

Run nos. 1 and 7 were performed for comparison and no activated carbon was added to the feed suspension of slaked lime or feed solution of sodium carbonate. In runs 2 through 6 and in run 8 activated carbon was added to said feed solution in an amount of app. 2% by weight of the solids content, corresponding to 0,04-0,05 $g/Nm^3$ of flue gas.

The following results were obtained:

| | Run no. 1 | 2 | 3 | 4 | 5 | 6 | 7 | 8 |
|---|---|---|---|---|---|---|---|---|
| Upstream of spray absorber | | | | | | | | |
| Hg vapor, µg/$Nm^3$ | 241 | 290 | 725 | 517 | 314 | 423 | 213 | 405 |
| Absorbent | Slaked lime | Slaked lime + activated carbon | slaked lime + activated carbon | slaked lime + activated carbon | slaked lime + activated carbon | slaked lime + activated carbon | $Na_2CO_3$ | $Na_2CO_3$ + activated carbon |
| Between spray absorber and baghouse | | | | | | | | |
| Gas temperature, °C | 130 | 130 | 100 | 160 | 175 | 165 | 130 | 130 |
| Hg vapor, µg/$Nm^3$ | 77 | 46 | not analysed | not analysed | not analysed | not analysed | not analysed | not analysed |
| Downstream the baghouse | | | | | | | | |
| Hg vapor, µg/$Nm^3$ | 30 | 20 | 11 | 42 | 63 | 80 | 96 | 47 |
| % removal | 87.6 | 93 | 98.9 | 92.9 | 79.9 | 81.1 | 54.9 | 88.4 |

The above results clearly indicate that activated carbon acts as a very efficient absorbent for mercury vapor when utilized in the process of the present invention.

**EXAMPLE 2**

Two further test runs was made in the same plant and under similar conditions as described in example 1, except that the flue gas temperature varied between 280 and 300°C.

The results obtained are listed in the following table:

| | Run No. 9 | Run No. 10 |
|---|---|---|
| Upstream of spray absorber | | |
| PCDD[1] +PCDF, µg/Nm$^3$ | 0.38 | 0.53 |
| Absorbent | slaked lime | slaked lime + activated carbon |
| Between spray absorber and baghouse | | |
| Gas temperature, °C | 150 | 150 |
| PCDD[1] +PCDF, µg/Nm$^3$ | not analysed | 0.28 |
| Downstream the baghouse | | |
| PCDD[1] +PCDF, µg/Nm$^3$ | 0.047 | 0.01 |
| % removal | 87.8 | 98.1 |

[1] The PCDD contents were approximately 35-45% of the total contents of PCDD and PCDF.

## CLAIMS

1. A process for removal of mercury vapor and/or vapor of chlorodibenzodioxins and/or vapor of chlorodibenzofurans from a stream of hot flue gas combined with a simultaneous removal of acidic components of the flue gas, characterized in that an aqueous liquid, which besides alkaline components comprises suspended activated carbon is spray dried in the flue gas which subsequently is freed from the resulting particulate material.

2. The process of claim 1, wherein the amount of activated carbon in said aqueous liquid amounts to 5-500 mg per $Nm^3$ flue gas being treated.

3. The process of claim 1, wherein the amount of activated carbon in said aqueous liquid amounts to 5-200 mg per $Nm^3$ flue gas being treated.

4. The process of claim 1, wherein said alkaline components comprise calcium hydroxide in a quantity at least sufficient to neutralize a substantial part of the acidic components, such as sulfuroxides and hydrogen chloride, of the flue gas.

5. The process of claim 1, wherein said particulate material is recovered in a baghouse.

6. The process of claim 1, wherein at least a portion of any fly ash present in the flue gas stream remains in said stream during the spray absorption process and is recovered together with the particulate material formed by the spray absorption process.

7. The process of claim 1, wherein at least a portion of any fly ash present in the flue gas stream is collected from said stream before said aqueous liquid is spray dried therein, and at least a part of the collected fly ash is suspended in said aqueous liquid before spraying thereof.

European Patent Office

# EUROPEAN SEARCH REPORT

Application number

0208490

EP 86 30 5054

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 049 399 (TELLER ENVIRONMENTAL SYSTEMS)<br>--- | | B 01 D 53/34 |
| A | US-A-2 886 131 (J.R. CONLISK)<br>--- | | |
| D,A | US-A-4 273 747 (E. RASMUSSEN)<br>--- | | |
| A | US-A-4 246 242 (C.H.S. BUTLER)<br>--- | | |
| A | CHEMICAL ABSTRACTS, vol. 88, no. 2, 9th January 1978, page 125, abstract no. 9181j, Columbus, Ohio, US; T. HALMOE: "Micropollutants from an incineration plant lower than expected", & FAST AVFALL 1977, (1), 29-31<br>----- | | TECHNICAL FIELDS SEARCHED (Int. Cl.4)<br>B 01 D |

The present search report has been drawn up for all claims

| Place of search | Date of completion of the search | Examiner |
|---|---|---|
| THE HAGUE | 26-08-1986 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82